# EUROPEAN PATENT APPLICATION

(11) **EP 1 186 469 A1**
(43) Date of publication of application: **13.03.2002**
(21) Application number: 01120307.2
(22) Date of filing: 24.08.2001
(51) Int. Cl.: B60N 2/68

(54) **A backrest for a motor vehicle seat, in particular for a rear seat**

(30) Priority: 28.08.2000 IT TO000821
(71) Applicant: Magnesium Products of Italy S.p.A., 11029 Verres (Aosta) (IT)
(72) Inventor: Garetto, Davide, 10141 Torino (IT)
(74) Representative: Gerbino, Angelo

(57) **Abstract**

A backrest for a motor vehicle seat, in particular for a rear seat, includes a one-piece structure (1a, 1b) of light alloy, the lower portion having hinge means (17) for pivoting the backrest (1a, 1b) about a pivoting axis (A) transverse the body (B) of the motor vehicle. The lower portion of the backrest (1a, 1b) includes a base cross member (5) lying mostly above the pivot axis (A) and parallel thereto, a pair of integral end wings (11) extending downwards from the base cross member (5), with the hinge means (17) attached to them. The end wings (11) extend substantially in the same plane as the base cross member (5) and are connected to each other by a lower cross member (15) which extends downwards from the base member (5).

## Description

The present invention relates to a backrest for a motor vehicle seat, in particular for a rear seat, and includes a one-piece light-alloy structure, with hinge means in the lower portion for pivoting the backrest about an axis of rotation transverse the body of the motor vehicle, the said lower portion of the backrest including a base cross member, predominantly above the pivot axis and parallel thereto, with a pair of integral wings extending downwards from the ends of the base cross member and the said hinge means associated with them.

A backrest structure of the type defined above is described in the document WO-98/15422. The structure referred to in this document comprises a frame formed in one piece by two cross members and two uprights arranged to form a frame in which an auxiliary structure can be fitted, between the two uprights and parallel to the cross members, for supporting the padding of the backrest. A pair of wings is connected to either end of the lower cross member of the frame for fixing it to the seat itself so that the backrest is pivotable about an axis. These wings, which can be formed in one piece with the frame, are constituted by respective plates arranged transverse the pivot axis of the backrest.

The backrest structure of this document is not sufficiently robust, however, to withstand impacts to its rear surface without appreciable deformation and is therefore not able to ensure the safety of passengers in such an event. In particular, it does not provide an effective structure for a rear seat backrest since this must be able to ensure considerable resistance to heavy stress, typically to any force applied to it as a result of sudden movement of items which might be contained in the rear storage compartment of the vehicle, the front of which is defined by the backrest itself, in the event of an impact to the front of the vehicle, or to force applied to the front of the backrest as a result of impact of passengers in the event of the motor vehicle being hit from the rear.

In order to solve this problem, the object of the present invention is to provide a backrest of the type described above, characterised in that the end wings lie substantially in the same plane as the base cross member and are connected by a lower cross member extending beneath the base cross member.

Thanks to this arrangement, the lower portion of the backrest of the invention is very strong, enabling it to withstand a high level of stress transverse its axis of rotation, with relatively little deformation.

Further characteristics and advantages of the invention will become apparent from the detailed description which follows, provided purely by way of non-limitative example with reference to the appended drawings, in which:
Figure 1 is a perspective view of a backrest of the invention,
Figure 2 is a front view of the backrest of Figure 1 seen from the direction of the arrow II,
Figure 3 is an enlarged perspective view of a detail indicated by the arrow III in Figure 1,
Figure 4 is a side elevation view, schematically illustrating some positions of a backrest of a seat of the invention,
Figure 5 is an enlarged perspective view of a detail indicated by the arrow V in Figure 1,
Figure 6 is an exploded perspective view of a detail of Figure 5,
Figure 7 is a front elevation view along the arrow VII of Figure 5,
Figure 8 is a front view, similar to that of Figure 7, showing a variant of the invention,
Figure 9 is a view similar to that of Figure 4, schematically illustrating some positions of a backrest of a seat according to the variant of Figure 8, and
Figure 10 is a perspective view in the direction of the arrow X of Figure 1, schematically illustrating a layer of padding arranged on the bearing surface of the backrest.

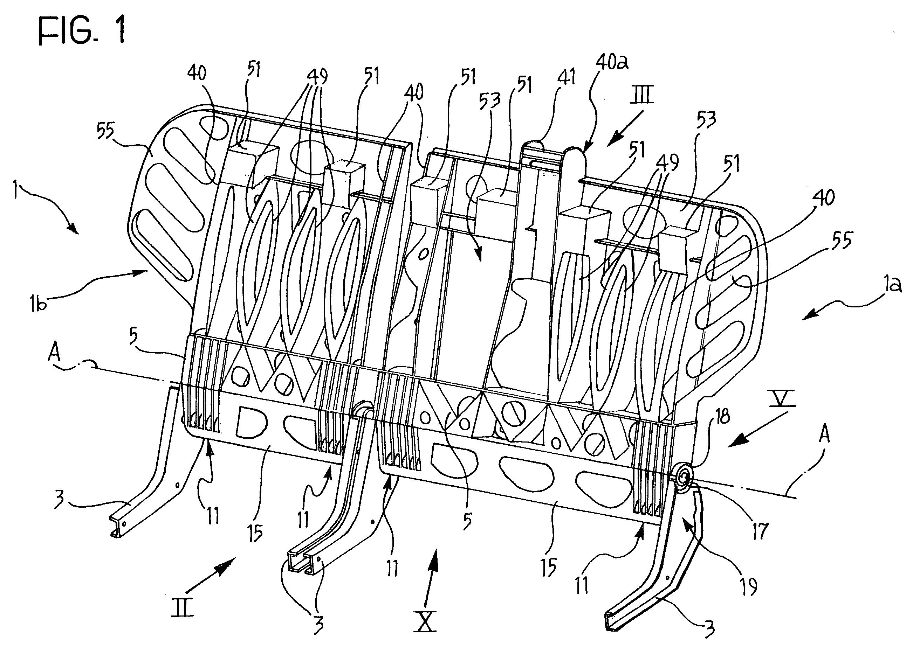

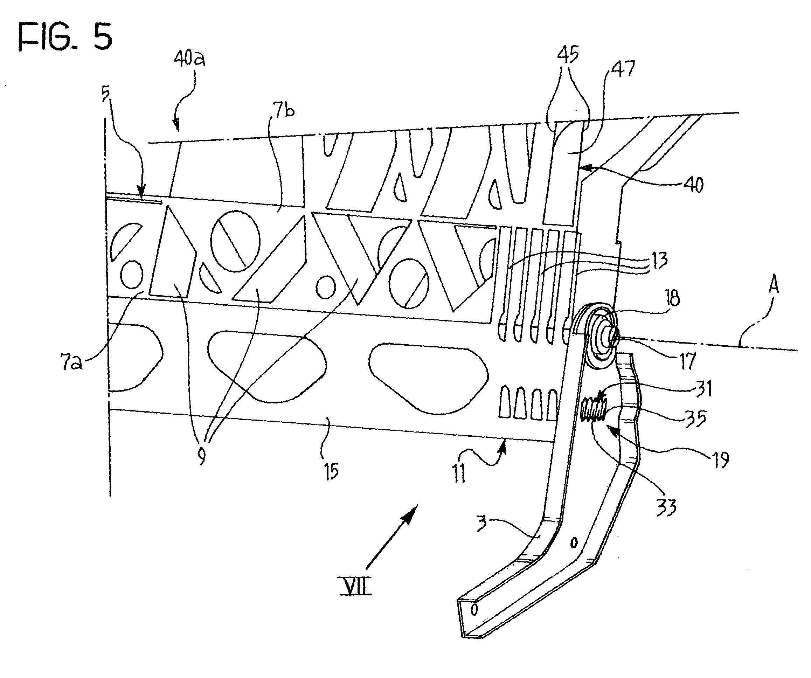

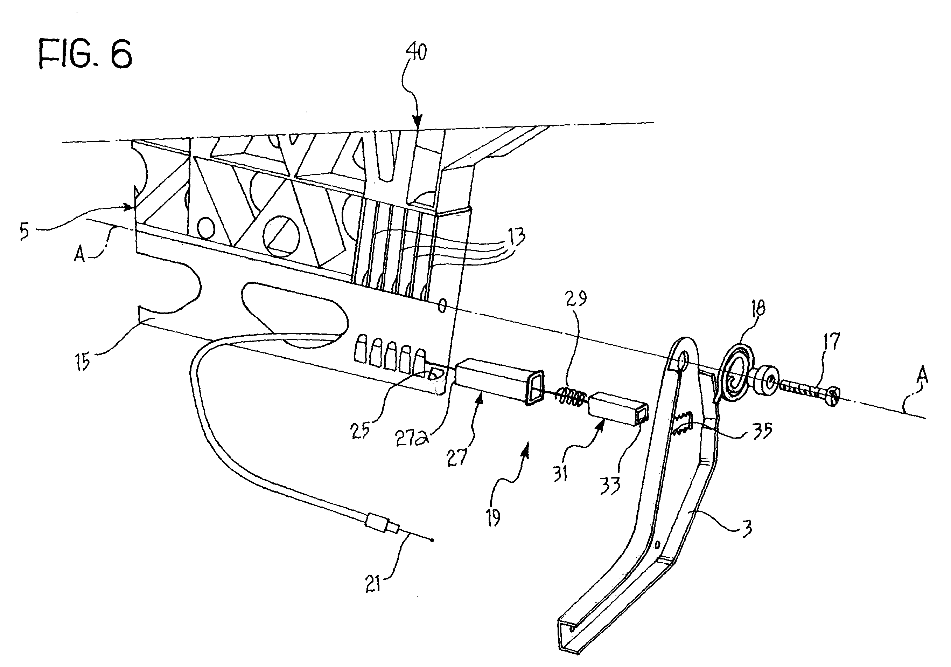

With reference first to Figures 1 to 7 and 10, a backrest structure for a motor vehicle rear seat is generally indicated 1. The structure 1 of the drawings includes, in a manner known per se, two portions 1a and 1b of different width arranged side by side. The invention is, however, also applicable to a backrest structure formed in one piece.

Each of the portions 1a and 1b is formed in one piece of a light alloy, such as a magnesium alloy, either by die casting or by thixoforming a magnesium or aluminium alloy.

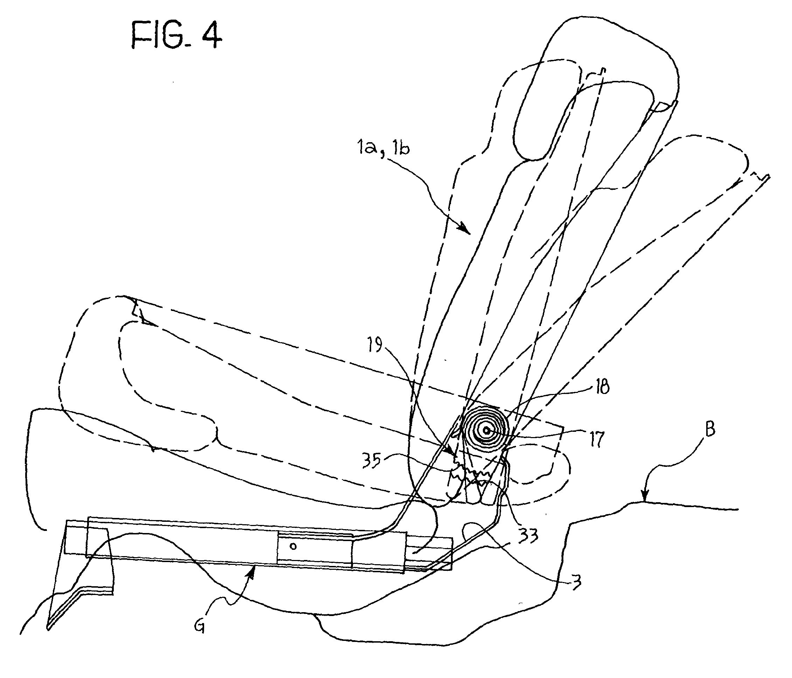

The portions 1a, 1b are both hinged along a pivoting axis A lying transverse the body B of the motor vehicle in which the seat is fitted. In particular, the parts 1a and 1b are each pivoted on a pair of brackets 3 mounted for sliding on longitudinal guides G (see Figure 4) forming part of the seat. To this end, the brackets 3 each have a hole through which passes a pin 17 coaxial with the axis A, as will be described in greater detail later.

Each of the portions 1a and 1b has a base cross member 5, extending parallel to the axis A and usually arranged above it.

The base cross member 5 includes a pair of parallel stringers 7a and 7b, one upper and one lower, in the shape of elongate plates, with a plurality of inclined uprights 9 between them, attached to the stringers 7a and 7b in a triangular configuration. The inclined uprights are preferably fixed together in pairs by means of perforated triangular plates, arranged alternately to one side or the other of the base member 5. This structure gives the base member 5 a box-like configuration, similar to that of a lattice girder system. Thanks to this structure, torsional stress on the ends of the base member 5, at the site of the wings 11 projecting from underneath of the base member 5, is spread over the entire structure of the backrest.

The wings 11 lie essentially in the same plane as the base member 5 and are connected to each other by means of a cross member 15, substantially constituted by a panel with a plurality of through apertures and projecting downwards from the base cross member 5.

Each of the wings 11 is conveniently strengthened by a plurality of ribs 13 lying transverse the axis A and securely fixing the wing to the base member 5 at one end thereof.

The wings 11 each have a hole for engaging the pins 17 which are coaxial with the axis A, locking devices 19 being associated with the wings 11 and the brackets 3 for locking the portions 1a, 1b of the structure into a selected angular position relative to the brackets 3. A coil spring 18 is also connected to each of the pins 17 for returning the associated portion 1a, 1b of the backrest to its erect position.

In particular, a hole 25 is formed through each of the wings 11 parallel to the axis A with a cylindrical bush 27, made of a self-lubricating plastics material, for example, inserted therein. Each bush 27 is trapezoidal in cross section, for example, with one end of a helical spring 29 resting on a base surface 27a thereof and the other end bearing against a slidable stop member 31, of a cylindrical shape corresponding to that of the bush 27. At the opposite end from the spring 29, the head of the member 31 has a plurality of substantially radial teeth 33 for meshing with the corresponding teeth 35 of an arcuate-sector locking formation formed in the associated bracket 3 beneath the axis A.

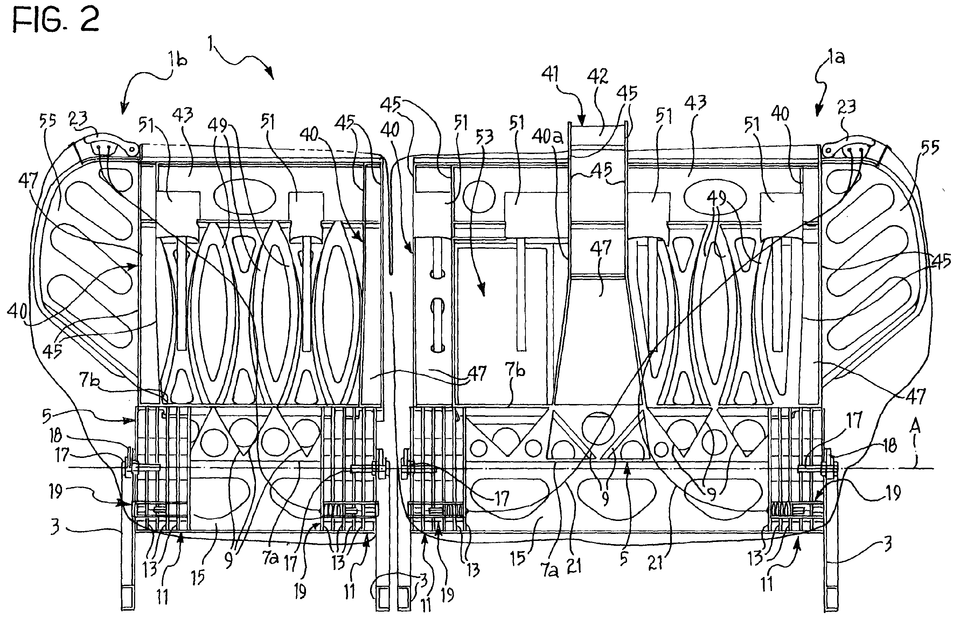

One end of a flexible cable 21 is connected to each member 31, with the opposite end connected to a lever-type control member 23 (see Figure 2) pivoted on a pin fixed to the structure of the seat in such a way that manual pivoting of the member 23 by a user causes traction on the cables 21 against the biasing action of the spring 29 until the member 31 is in a retracted position relative to the associated wing 11. In this position, the teeth 33 of the member 31 disengage from the teeth of the formation 35, whereby the backrest 1a, 1b is free to pivot about the axis A.

On release of the lever 23, which ends the traction on the cables 21, each member 31 moves into a forward position relative to the associated wing 11 under the action of the spring 29, whereby its teeth 33 engage some of the teeth of the associated formation 35, thereby locking the associated portion 1a, 1b of the structure 1 into the position selected.

A plurality of uprights 40, 40a extend upwards from the base member 5, each including a pair of elongate plates 45, positioned transverse the axis A with a corrugated reinforcing panel 47 fixed between them and both the plates 45 and the panel 47 being formed in one piece with the portions 1a, 1b.

The top ends of the uprights 40, 40a of each portion 1a, 1b are connected to each other by an upper cross member 43.

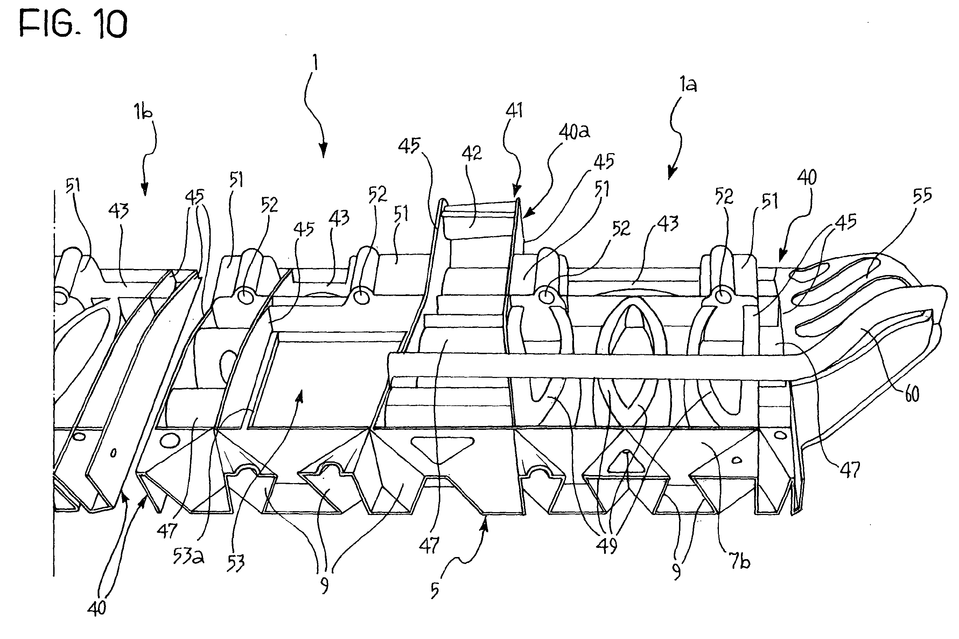

In the area defined between the base member 5, the cross member 43 and adjacent uprights 40, 40a, an integral auxiliary structure can be arranged for supporting a layer of padding 60 (see Figure 10) for the backrest structure 1. This auxiliary structure includes a plurality of arcuate ribs 49 arranged in pairs in a diamond configuration so as to form elongate bobbin-shaped apertures between the respective pairs. Where the ends of two ribs join, the ribs 49 are joined to the corresponding corner of a triangular portion of the base member 5 in such a way that any stress, in particular torsional stress, to which the base member 5 is subjected is transmitted in the optimum manner to the series of ribs 49 and thereby spread through the rest of the structure 1a, 1b. The ends of the various ribs 49 facing the front surface of the structure 1 form a discontinuous support surface for the padding 60, which can simply be laid on them without the need for any additional support structure.

It is convenient if a large aperture 53 is formed through a substantially central position of the backrest structure 1, between an upright 40 and an upright 40a, for housing a pivotable armrest (not shown in the drawings) of the backrest 1 so that, when the armrest is in a lowered position it is possible to slide elongate objects, for example a pair of skis, through the aperture 53. In this case, in the structure 1a it is convenient if means for pivoting or fixing such an armrest on the structure are formed integrally with it. Preferably, a frame 53a is formed around the periphery of the aperture 53 so as to define a trimming groove open towards the rear of the structure 1 for housing the edges of the front and rear covers (not shown) of the backrest.

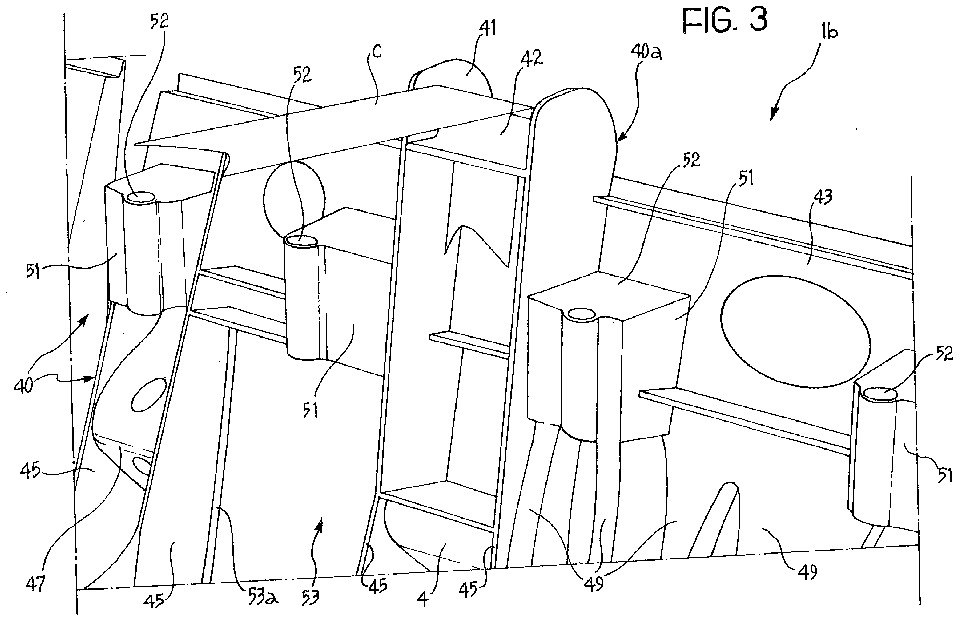

The upright 40a has an extension 41 which projects above the cross member 43 and can thus act as return for a seat belt C (see Figure 3). In particular, a device known per se for winding the seatbelt C can be arranged on the upright 40a, while it is advantageous if a tubular or half-tubular formation 42, parallel to the axis A, is formed integrally with the extension 41 for guiding the seat belt C.

A plurality of box-like bodies 51 are also formed integrally with the cross member 43, each open to the rear and having a through hole 52 (see Figure 3) with its axis transverse the axis A, thereby forming respective guides for slidably housing the support rods of headrests (not shown) associated with the backrest structure 1. Additional guides for these rods could consist of holes formed through the corrugated panels 47 in the event of a guide body 51 being positioned at the site of one of the uprights 40, 40a.

A side extension 55 is formed at one end of each portion 1a, 1b for connecting the structure 1 to the body B of the motor vehicle above the rear wheel arch of the motor vehicle.

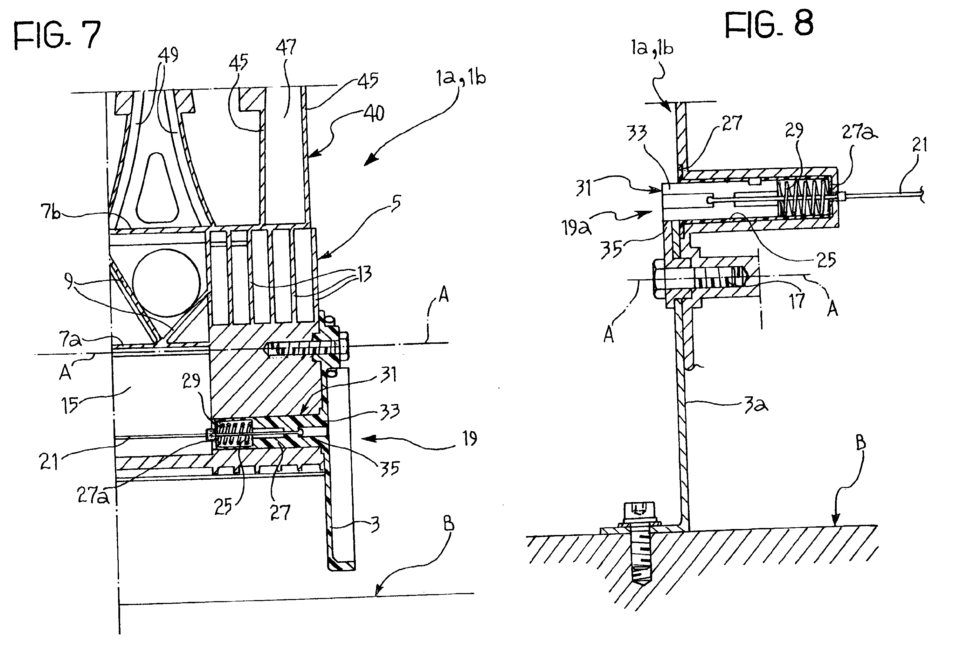

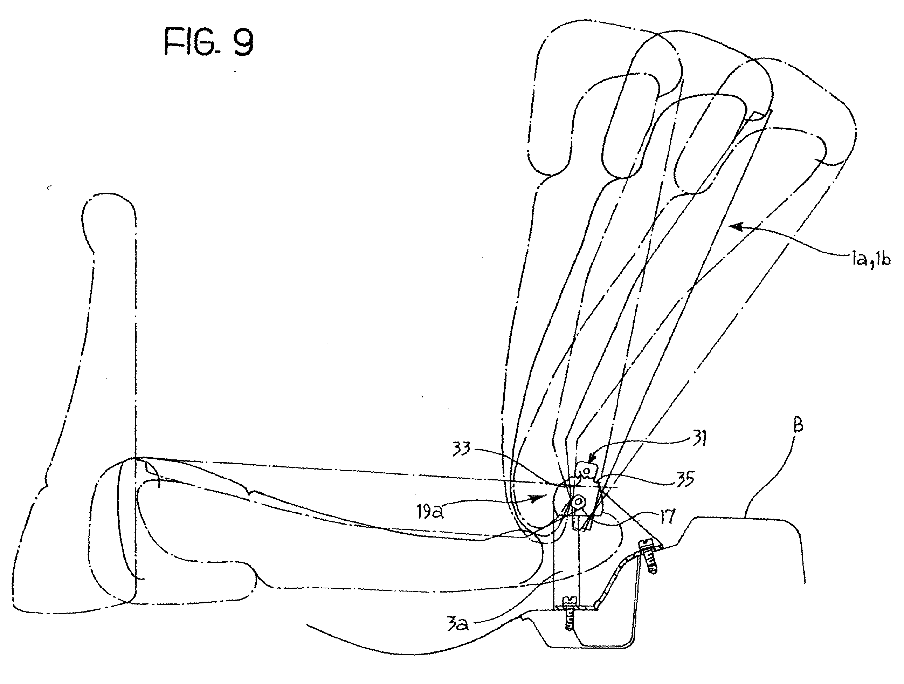

With reference to Figures 8 and 9 of the drawings, in which the same reference numbers are used to indicate parts which are identical or similar to those of the previously described variant, the device for locking the backrest 1 is indicated 19a. Unlike the first variant, the locking system 19a includes a locking formation 35 which includes a plate with an arcuate-sector, toothed upper portion above the axis A, the teeth of which are intended to mesh with the teeth 33 of an associated slidable stop member 31, identical to that described earlier. In this case, the formation 35 is securely fixed to a bracket 3a secured to the body B of the motor vehicle.

## Claims

1. A backrest for a motor vehicle seat, in particular for a rear seat, which includes a one-piece structure (1a, 1b) of light alloy, the lower portion of which has hinge means (17) for pivoting the backrest (1a, 1b) about a pivot axis (A) transverse the body (B) of the motor vehicle, the said lower portion of the backrest (1a, 1b) including a base cross member (5) lying mostly above the pivot axis (A) and parallel thereto, with a pair of integral end wings (11) extending downwards from the base cross member (5) with the said hinge means (17) secured to them,
**characterised in that** the end wings (11) lie substantially in the same plane as the base cross member (5) and are connected to each other by a lower cross member (15) which extends downwards from the base member (5).

2. A backrest according to Claim 1, **characterised in that** the said wings (11) include a plurality of strengthening ribs (13) parallel to the base cross member (5).

3. A backrest according to Claim 1 or Claim 2, **characterised in that** the base cross member (5) includes a pair of parallel plate-like stringers (7a, 7b) with a plurality of inclined panel uprights (9) extending between them, connected to the said stringers (7a, 7b) in a triangular configuration, in order to distribute any torsional stress on the wings (11) across the backrest structure (1a, 1b).

4. A backrest according to any of Claims 1 to 3, **characterised in that** a seat (25) is formed in each of the said wings (11), parallel to the pivot axis (A), for housing a respective sliding stop member (31) either in an extended position in which it engages a corresponding locking formation (35) connected to a backrest support structure (3; 3a) fixed to the body (B) of the motor vehicle, or in a retracted position in which the stop member (31) is spaced from the respective locking formation (35) making it possible to adjust the angular position of the backrest (1a, 1b) relative to the body (B) of the motor vehicle.

5. A backrest according to Claim 4, **characterised in that** a guide bush (27) is interposed between each seat (25) and the respective stop member (31).

6. A backrest according to Claim 4 or Claim 5, **characterised in that**, resilient biasing means (18) tending to move it into an erect position are interposed between the said wings (11) and the said support structure (3; 3a).

7. A backrest according to Claim 6, **characterised in that** the said resilient biasing means include a coil spring (18) centred on the pivoting axis (A) of the backrest (1a, 1b).

8. A backrest according to any Claim from 4 to 7, **characterised in that** the said seat (25) is a cylindrical seat with a base surface (27a) housing a substantially cylindrical stop member (31), resilient means (29) being interposed between the stop member (31) and the base surface (27a) for urging the stop member (31) into the said extended position.

9. A backrest according to Claim 8, **characterised in that** a flexible cable (21) is connected to each stop member (31) and traction on this moves the stop member (31) into its retracted position against the action of the said resilient biasing means (29).

10. A backrest according to Claim 9, **characterised in that** it includes lever control means (23), connected to the cables (21) of the said stop members (31), which can be operated to put the said cable (21) under traction.

11. A backrest according to any Claim from 4 to 10, **characterised in that** each stop member (31) has a head with teeth (33) for engaging corresponding teeth (35) on an arcuate toothed sector of the said locking formation.

12. A backrest according to Claim 11, **characterised in that** the toothed sector (35) is an arcuate sector coaxial with the said pivot axis (A) with a radius of curvature equal to its distance from the said axis (A).

13. A backrest according to any Claim from 1 to 12, **characterised in that** a plurality of uprights (40, 40a) extend upwards from the base cross member (5), with their top ends connected by an upper cross member (43), the said uprights (40, 40a) and the said upper cross member (43) being integral with the structure of the backrest (1a, 1b).

14. A backrest according to Claim 13, **characterised in that** integral guide formations (51) for the support rods of a headrest associated with the backrest (1a, 1b) extend from the upper cross member (43).

15. A backrest according to Claim 13 or Claim 14, **characterised in that** it includes an upright (40a) for carrying a winding system for a seat belt, this upright (40a) including an integral extension (41) projecting above the upper cross member (43) and having return means (42) for the seat belt (C).

16. A backrest according to any Claim from 13 to 15, **characterised in that** the uprights (40, 40a) each include a pair of elongate plates (45) transverse the pivot axis (A) of the backrest (1a, 1b), with a corrugated strengthening panel (47) arranged between them, the elongate plates (45) and the corrugated plate (47) all being formed in one piece with the backrest structure (1a, 1b).

17. A backrest according to any Claim from 13 to 16, **characterised in that** it includes an auxiliary structure (49) for supporting a padded layer (60), extending between the base cross member (5) and the upper cross member (43), between at least one pair of the said uprights (40, 40a).

18. A backrest according to Claim 17, **characterised in that** the said auxiliary support structure includes a plurality of arcuate ribs (49) arranged in a substantially diamond pattern so that an elongate aperture is defined between each pair.

19. A backrest according to any Claim from 13 to 16, **characterised in that**, in a substantially central portion of the backrest (1a, 1b) an aperture is formed through one pair of the said uprights (40, 40a) for housing a pivotable armrest in the backrest.

20. A backrest according to any Claim from 13 to 19, **characterised in that** an integral side flap (55) extends from at least one end upright (40) of the backrest (1a, 1b) for fixing the backrest (1a, 1b) to the body (B) of the motor vehicle above a wheel arch.

21. A backrest according to any Claim from 1 to 20, **characterised in that** the structure thereof comprises two portions (1a, 1b) arranged side by side and each movable independently of the other.
